# EUROPÄISCHE PATENTSCHRIFT

(11) **EP 1 816 287 B1**
(45) Veröffentlichungstag und Bekanntmachung des Hinweises auf die Patenterteilung: **01.10.2008**
(21) Anmeldenummer: 07002002.9
(22) Anmeldetag: 30.01.2007
(51) Int. Cl.: E05B 15/02, B60J 7/185

(54) **Gegenlagereinrichtung einer Vorrichtung zur Verriegelung eines geschlossenen Falt- oder Klappverdecks an einem Kraftfahrzeug**
Striker unit of a device for locking a closed folding roof to a vehicle
Gâche d'un dispositif pour le verrouillage d'un toit escamotable fermé d'un véhicule

(30) Priorität: 04.02.2006 DE 102006005144
(43) Veröffentlichungstag der Anmeldung: 08.08.2007
(73) Patentinhaber: Bayerische Motoren Werke Aktiengesellschaft, 80809 München (DE)
(72) Erfinder: Baumgartner, Gerd, 85757 Karlsfeld (DE)

(56) Entgegenhaltungen:
- DE-U1- 29 703 774
- US-A- 5 215 342
- US-A1- 2004 094 988

## Beschreibung

Die Erfindung betrifft eine Gegenlagereinrichtung einer Vorrichtung zur Verriegelung eines geschlossenen Falt- oder Klappverdecks an einem Kraftfahrzeug, mit den im Oberbegriff des Patentanspruches 1 angegebenen Merkmalen.

Eine derartige Gegenlagereinrichtung ist bei BMW Cabrio-Fahrzeugen der aktuellen 3-er Baureihe vorgesehen. Das Basisteil bildet an seiner Oberseite eine sichtbare Oberfläche, die beispielsweise aufwändig elektropoliert ist. Entsprechend dem Verstellbereich des Basisteiles in Fahrzeuglängsrichtung ist zwischen dem Basisteil und der Ausnehmung im oberen Windlauf bzw. in einem als Blende ausgebildeten Bauteil ein Spalt gebildet, der zumindest bei genauerer Betrachtung sichtbar ist. In den Spalt können eventuell kleine Körper, beispielsweise von einem Baum fallende Teile wie Tannennadeln gelangen, die nicht einfach zu beseitigen sind und störend wirken können.

Das Gebrauchsmuster DE 297 03 774 U1 zeigt eine weitere Gegenlagereinrichtung.

Der Erfindung liegt die Aufgabe zu Grunde, eine Gegenlagereinrichtung mit den Merkmalen im Oberbegriff des Patentanspruches 1 anzugeben, die kostengünstiger zu fertigen ist und Ablagerungen kleiner Körper auf der Gegenlagereinrichtung vermindern oder verhindern kann.

Diese Aufgabe ist durch die Merkmale des Patentanspruches 1 gelöst. Vorteilhafte Ausgestaltungen der Erfindung sind Gegenstand der Unteransprüche.

Durch das Abdeckelement sind einerseits das Basisteil und andererseits ein Spalt zwischen dem Basisteil und zumindest einem Randbereich der Ausnehmung von oben überdeckt, so dass keine kleinen Körper in diesen Spalt fallen können. Vorzugsweise ist der Spalt der größte oder der gesamte Spalt zwischen dem Basisteil und dem Rand der Ausnehmung. Die Oberfläche des Basisteiles ist nicht aufwändig zu behandeln, da diese von dem Abdeckelement größtenteils oder vollständig überdeckt sein kann und damit kaum oder nicht sichtbar ist. Das Abdeckelement ist kostengünstig mit einer gewünschten optischen Oberfläche beispielsweise durch einen Zinkdruckguss oder aus einem Kunststoff zu fertigen. Die zusätzliche Verwendung des Abdeckelements ergibt überraschend eine Kostenersparnis gegenüber der bekannten Ausführung mit einer beispielsweise aufwändig elektropolierten Oberfläche des Basisteiles.

Ein Ausführungsbeispiel der Erfindung wird anhand einer Zeichnung näher erläutert. Es zeigen
- Fig. 1: eine perspektivische Draufsicht auf die Gegenlagereinrichtung bei geöffnetem Falt- oder Klappverdeck, ohne das Abdeckelement,
- Fig. 2: eine zu Figur 1 ähnliche Draufsicht, mit montiertem Abdeckelement und
- Fig. 3: einen Querschnitt durch eine Clips- oder Rastverbindung, die das Abdeckelement mit dem Basisteil lösbar verbindet.

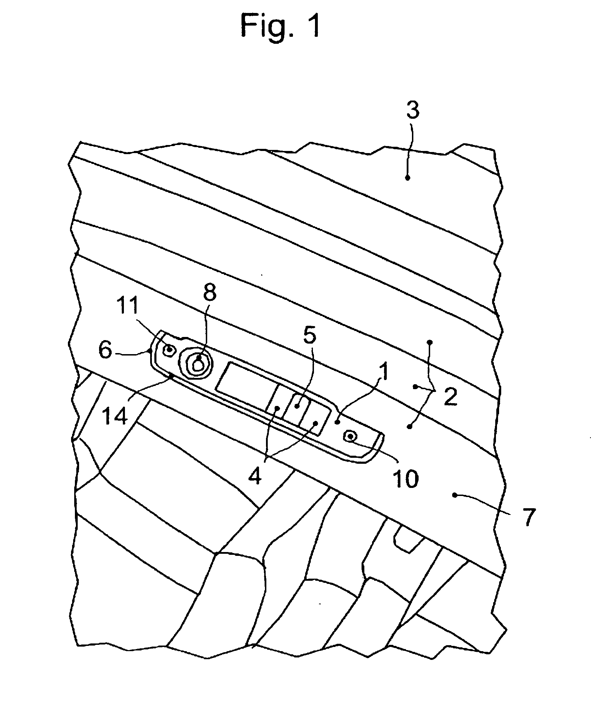

Die in Figur 1 in einer perspektivischen Draufsicht dargestellte Gegenlagereinrichtung einer Vorrichtung zur Verriegelung eines geschlossenen Falt- oder Klappverdecks an einem Kraftfahrzeug weist ein Basisteil 1 auf, das an einem oberen Windlauf 2 über der vorderen Windschutzscheibe 3 lösbar beispielsweise über eine Schraubverbindung befestigt ist. In dem Basisteil ist eine Zugangsöffnung 4 ausgebildet, in der sich eine durch einen Bolzen oder eine drehbare Rolle 5 gebildete Stützschulter befindet, die bei geschlossenem Falt- oder Klappverdeck von einem verstellbaren Verriegelungselement an einem vordersten Querspriegel des Falt- oder Klappverdecks hintergriffen ist.

Das Basisteil 1 ist zumindest an seinem oberen Bereich in einer oben offenen Ausnehmung 6 des oberen Windlaufes und/oder eines mit dem Windlauf 2 beispielsweise über eine Schraubverbindung verbindbaren Bauteiles 7 angeordnet, wobei das Bauteil 7 als Blende ausgebildet ist. Die Ausnehmung 6 ist in Fahrzeuglängsrichtung größer als das Basisteil 1 ausgebildet, so dass das Basisteil 1 in Fahrzeuglängsrichtung in der Ausnehmung 6 verstellbar und in der jeweiligen Einstelllage mit dem Windlauf 2 beispielsweise über eine Schraubverbindung zu verbinden ist.

Außerdem weist das Basisteil 1 in einem Abstand zur Zugangsöffnung 4 eine oben offene Zentrieröffnung 8 auf, in die beim Schließen des Falt- oder Klappverdecks ein von dem vordersten Querspriegel des Falt- oder Klappverdecks nach unten abstehender Zentrierbolzen eingreift, der mit der Zentrieröffnung 8 zusammen wirkend den Querspriegel am oberen Windlauf 2 in einer etwa horizontalen Ebene zentriert.

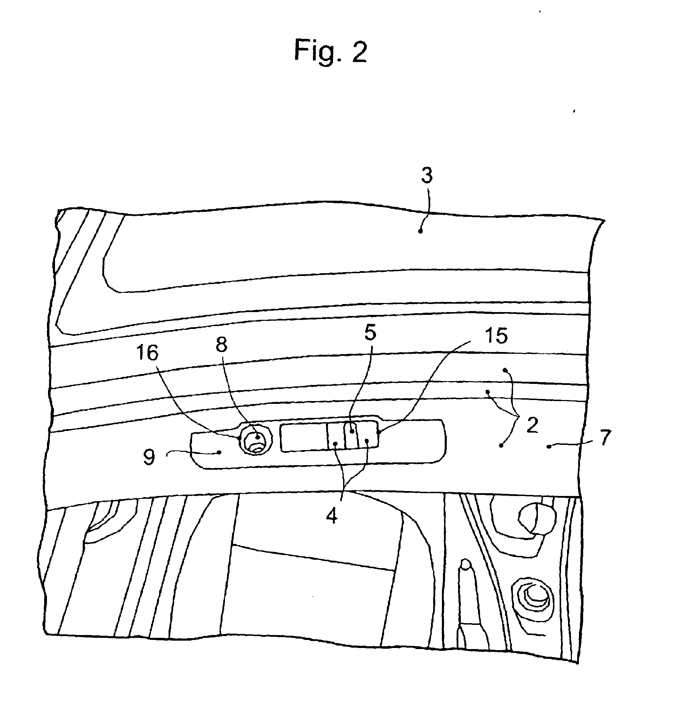

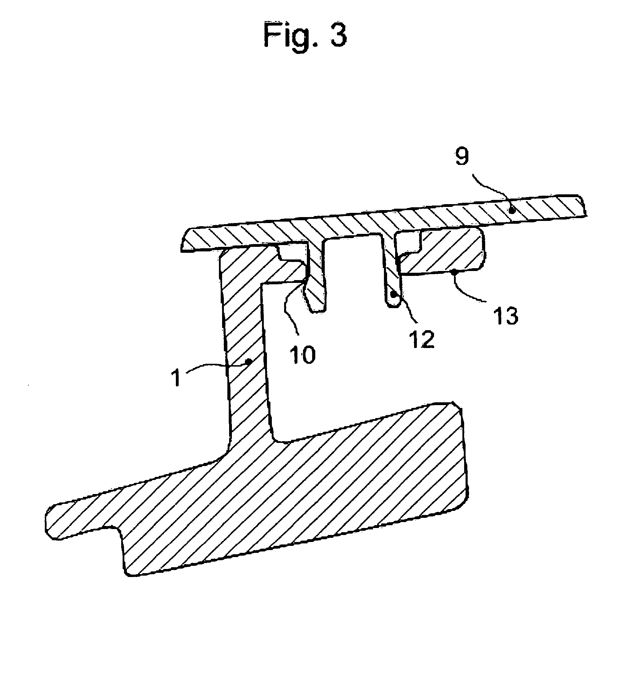

Das Basisteil 1 ist von einem in den Figuren 2 und 3 dargestellten Abdeckelement 9 überdeckt, das in Figur 1 der Übersichtlichkeit wegen weggelassen ist. Das Abdeckelement 9 ist über eine Clips- oder Rastverbindung lösbar mit dem Basisteil 1 verbunden. Hierzu weist die Clips- oder Rastverbindung in der Oberseite des Basisteiles 1 zwei Rastausnehmungen 10, 11 auf, in die jeweils eine von dem Abdeckelement 9 nach unten abstehende Rastnase 12 bis in eine Rastlage einsteckbar ist, in der die betreffende Rastnase 12 entweder in eine radiale Erweiterung in der Rastausnehmung eingreift oder wie in Figur 3 dargestellt einen Wandbereich 13 an dem Basisteil 1 hintergreift bzw. untergreift.

Zwischen der in Fahrzeuglängsrichtung größer als das Basisteil 1 ausgebildeten Ausnehmung 6 und dem Basisteil 1 ist ein Spalt 14 gebildet, der von dem in Figur 2 dargestellten Abdeckelement 9 überdeckt ist, das in der dargestellten Draufsicht größer als das Basisteil 1 ausgebildet ist und deshalb auch das Basisteil 1 vollständig überdeckt.

Damit beim Schließen des Falt- oder Klappverdecks der nicht dargestellte Zentrierbolzen in die Zentrieröffnung 8 im Basisteil 1 eintreten und das ebenfalls nicht dargestellte Verriegelungselement, das bei dem Ausführungsbeispiel ein Verriegelungshaken ist, in die Zugangsöffnung 4 eingreifen und die Rolle 5 untergreifen kann, sind in dem Abdeckelement 9 wie in Figur 2 dargestellt eine jeweils oben offene Durchtrittsöffnung 15 und eine weitere Durchtrittsöffnung 16 ausgebildet.

Dem Figur 3 entsprechenden Querschnitt durch eine Clips- oder Rastverbindung zur lösbaren Befestigung des Abdeckelements 9 an dem Basisteil 1 sind weitere Einzelheiten entnehmbar.

Das Abdeckelement 9 kann aus einem beliebigen Werkstoff, beispielsweise durch einen Zinkdruckguss oder aus einem Kunststoff gefertigt sein.

Bei dem Ausführungsbeispiel wird bei der Montage der Gegenlagereinrichtung zunächst das Basisteil 1, dann das mit dem Windlauf 2 verbindbare, als Blende ausgebildete Bauteil 7und danach das Abdeckelement 9 an dem Windlauf 2 vorzugsweise jeweils lösbar beispielsweise über eine Schraubverbindung befestigt.

Das Abdeckelement könnte auch an einem anderen Teil, beispielsweise an dem Bauteil 7 befestigt sein. Das Abdeckelement und das Basisteil könnten auch einteilig ausgebildet bzw. verbunden sein.

## Patentansprüche

1. Gegenlagereinrichtung einer Vorrichtung zur Verriegelung eines geschlossenen Falt- oder Klappverdecks an einem Kraftfahrzeug, mit einem am oberen Windlauf (2) über der vorderen Windschutzscheibe (3) lösbar befestigten Basisteil (1), an dem eine Zugangsöffnung (4) ausgebildet ist, in der sich eine Stützschulter (5) befindet, die bei geschlossenem Falt- oder Klappverdeck von einem verstellbaren Verriegelungselement an einem vordersten Querspriegel des Falt- oder Klappverdecks hintergriffen ist, und das Basisteil (1) zumindest an seinem oberen Bereich in einer oben offenen Ausnehmung (6) des oberen Windlaufes (2) und/oder eines mit dem Windlauf (2) verbundenen oder verbindbaren Bauteiles (7) angeordnet ist und in Fahrzeuglängsrichtung die Ausnehmung (6) größer als das Basisteil (1) ausgebildet ist, so dass das Basisteil (1) in Fahrzeuglängsrichtung in der Ausnehmung (6) verstellbar ist, **dadurch gekennzeichnet, dass** das Basisteil (1) oben von einem Abdeckelement (9) überdeckt ist, das eine Durchtrittsöffnung (15) für das Verriegelungselement aufweist und einen Spalt (14) zwischen dem Basisteil (1) und zumindest einem Randbereich der Ausnehmung (6) von oben überdeckt.

2. Gegenlagereinrichtung nach Patentanspruch 1, **dadurch gekennzeichnet, dass** das Basisteil (1) in einem Abstand von der Zugangsöffnung (4) eine oben offene Zentrieröffnung (8) aufweist, und bei geschlossenem Falt- oder Klappverdeck ein von dem vordersten Querspriegel nach unten abstehender Zentrierbolzen durch die Durchtrittsöffnung oder eine weitere Durchtrittsöffnung (16) im Abdeckelement (9) hindurch in die Zentrieröffnung (8) einsteckbar ist, der mit der Zentrieröffnung (8) zusammen wirkend den Querspriegel an dem oberen Windlauf (2) in einer etwa horizontalen Ebene zentriert.

3. Gegenlagereinrichtung nach Patentanspruch 1 oder 2, **dadurch gekennzeichnet, dass** das Abdeckelement (9) in einer Draufsicht größer als das Basisteil (1) ausgebildet ist.

4. Gegenlagereinrichtung nach einem der Patentansprüche 1 bis 3, **dadurch gekennzeichnet, dass** das Abdeckelement und das Basisteil einteilig verbunden sind.

5. Gegenlagereinrichtung nach einem der Patentansprüche 1 bis 3, **dadurch gekennzeichnet, dass** das Abdeckelement (9) mit dem Basisteil (1) lösbar verbunden ist.

6. Gegenlagereinrichtung nach Patentanspruch 5, **dadurch gekennzeichnet, dass** das Abdeckelement (9) über eine Clips- oder Rastverbindung lösbar mit dem Basisteil (1) verbunden ist.

7. Gegenlagereinrichtung nach Patentanspruch 6, **dadurch gekennzeichnet, dass** die Clips- oder Rastverbindung wenigstens eine oben offene Rastausnehmung (10, 11) in der Oberseite des Basisteiles (1) und wenigstens eine von dem Abdeckelement (9) nach unten abstehende Rastnase (12) aufweist, die in die zugeordnete Rastausnehmung (10, 11) bis in eine Rastlage einsteckbar ist, in der die Rastnase (12) in eine radiale Erweiterung in der Rastausnehmung eingreift oder einen Wandbereich (13) an dem Basisteil (1) hintergreift bzw. untergreift.

8. Gegenlagereinrichtung nach einem der Patentansprüche 1 bis 7, **dadurch gekennzeichnet, dass** das Abdeckelement (9) durch einen Zinkdruckguss oder aus einem Kunststoff gefertigt ist.

9. Gegenlagereinrichtung nach einem der Patentansprüche 1 bis 8, **dadurch gekennzeichnet, dass** bei der Montage der Gegenlagereinrichtung zunächst das Basisteil (1), dann das mit dem Windlauf (2) verbindbare Bauteil (7) und danach das Abdeckelement (9) jeweils am Windlauf (2) befestigt sind.

## Claims

1. A thrust bearing means in a device for locking a closed collapsible or convertible hood or roof on a motor vehicle, comprising a base part (1) formed with an access opening (4) and releasably fastened to the top apron (2) via the front windscreen (3), the opening containing a supporting shoulder (5) which, when the collapsible or convertible hood or roof is closed, is gripped from behind by an adjustable fastening element on a front transverse hoop or arch of the hood or roof, and the base part (1), at least at its top region, is disposed in an upwardly open recess (6) in the top apron (2) and/or in a component (7) connected or connectable to the apron (2), and in the longitudinal direction of the vehicle the recess (6) is greater than the base part (1) so that in the longitudinal direction of the vehicle the base part (1) is adjustable in the recess (6), **characterised in that** the base part (1) is covered on top by a cover element (9) formed with a passage opening (15) for the locking element and also covering a gap (14) between the base part (1) and at least one edge region of the recess (6) on top.

2. A thrust bearing means according to claim 1, **characterised in that** the base part (1) has an upwardly open centring opening (8) at a distance from the access opening (4) and, when the hood or roof is closed, a centring bolt projecting downwards from the front transverse hoop or arch is insertable through the passage opening or an additional passage opening (16) in the cover element (9) into the centring opening (8), the bolt co-operating with the centring opening (8) in order to centre the transverse hoop or arch on the upper apron (2) in an approximately horizontal plane.

3. A thrust bearing means according to claim 1 or claim 2, **characterised in that** the cover element (9) in plan view is larger than the base part (1).

4. A thrust bearing means according to any of claims 1 to 3, **characterised in that** the cover element is integrally connected to the base part.

5. A thrust bearing means according to any of claims 1 to 3, **characterised in that** the cover element (9) is releasably connected to the base part (1).

6. A thrust bearing means according to claim 5, **characterised in that** the cover element (9) is releasably connected to the base part (1) by a clip or snap-in connection.

7. A thrust bearing means according to claim 6, **characterised in that** the clip or snap-in connection comprises at least one upwardly open catch recess (10, 11) in the top of the base part (1) and at least one catch lug (12) which projects downwardly from the cover element (9) and is insertable into the associated snap-in recess (10, 11) up to a locked position in which the lug (12) engages in a radial wide part in the recess or grips underneath or behind a wall region (13) on the base part (1).

8. A thrust bearing means according to any of claims 1 to 7, **characterised in that** the cover element (9) is in the form of a zinc pressure casting or a plastics material.

9. A thrust bearing means according to any of claims 1 to 8, **characterised in that** during assembly of the thrust bearing means, first the base part (1), then the part (7) connectable to the apron (2) and finally the cover element (9) respectively are fastened to the apron (2).

## Revendications

1. Gâche d'un dispositif de verrouillage d'un toit pliant ou à volets, en position fermée, d'un véhicule automobile comportant une pièce de base (1) fixée de manière amovible au passage d'air supérieur (2) au-dessus du pare-brise avant (3), et qui comporte un orifice d'accès (4) dans lequel se trouve un épaulement d'appui (5) qui, lorsque le toit pliant ou à volets, est fermé, est pris par derrière par un élément de verrouillage réglable de l'arceau transversal avant du toit pliant ou à volets et la pièce de base (1) est prévue au moins dans sa zone supérieure, dans une cavité supérieure ouverte (6) du passage d'air (2) et/ou comporte une pièce (7) reliée ou susceptible d'être reliée au passage d'air (2) et, dans la direction longitudinale du véhicule, la cavité (6) est plus grande que la pièce de base (1) de façon que celle-ci (1) soit réglable dans la cavité (6) dans la direction longitudinale du véhicule,
**caractérisée en ce que**
la pièce de base (1) est couverte au-dessus par un élément de couverture (9) qui comporte un orifice de passage (15) pour l'élément de verrouillage et un intervalle (14) entre la pièce de base (1) et au moins une zone de bord de la cavité (6) est couverte par le dessus.

2. Gâche selon la revendication 1,
**caractérisée en ce que**
la pièce de base (1) comporte, à une distance de l'orifice d'accès (4), un orifice de centrage (8) ouvert vers le haut et, lorsque le toit plaint et/ou à volets est fermé, un goujon de centrage en saillie vers le bas de l'arceau transversal le plus à l'avant s'engage à travers l'orifice de passage ou un autre orifice de passage (16) dans l'élément de couverture (9) en passant dans l'orifice de centrage (8), et coopère avec l'orifice de centrage (8) pour centrer l'arceau transversal, sensiblement dans un plan horizontal, sur le passage d'air supérieur (2).

3. Gâche selon la revendication 1 ou 2,
**caractérisée en ce que**
l'élément de couverture (9) est plus grand en vue de dessus que la pièce de base (1).

4. Gâche selon l'une des revendications 1 à 3,
**caractérisée en ce que**
l'élément de couverture et la pièce de base sont reliés en une seule partie.

5. Gâche selon l'une des revendications 1 à 3,
**caractérisée en ce que**
l'élément de couverture (9) est relié de manière amovible à la pièce de base (1).

6. Gâche selon la revendication 5,
**caractérisée en ce que**
l'élément de couverture (9) est relié de manière amovible à la pièce de base (1) par une liaison par enclipsage ou encliquetage.

7. Gâche selon la revendication 6,
**caractérisée en ce que**
la liaison par enclipsage ou encliquetage comporte au moins une cavité d'enclipsage (10, 11) dont le dessus est ouvert, dans la face supérieure de la pièce de base (1) et au moins un bec d'enclipsage (12) en saillie vers le bas par rapport à l'élément de couverture (9), ce bec s'engageant dans la cavité d'enclipsage (10, 11) correspondante jusque dans sa position d'enclipsage dans laquelle le bec (12) pénètre dans une extension radiale dans la cavité d'enclipsage ou vient prendre derrière ou dessous une partie de paroi (13) de la pièce de base (1).

8. Gâche selon l'une des revendications 1 à 7,
**caractérisée en ce que**
l'élément de couverture (9) est fabriqué en fonte de zinc ou en matière plastique.

9. Gâche selon l'une des revendications 1 à 8,
**caractérisée en ce que**
lors du montage de la gâche, on fixe tout d'abord la pièce de base (1) puis la pièce (7) reliée au passage d'air (2) et ensuite l'élément de couverture (9), chaque fois sur le passage d'air (2).
